Europäisches Patentamt

(19) European Patent Office

Office européen des brevets

(11) Publication number: **0 199 571**
**A1**

(12) # EUROPEAN PATENT APPLICATION

(21) Application number: 86302977.3

(22) Date of filing: 21.04.86

(51) Int. Cl.⁴: **G 01 S 15/89**
**G 01 S 15/10, G 01 S 13/90**
**G 01 S 13/34**

(30) Priority: 20.04.85 NZ 211249

(43) Date of publication of application:
29.10.86 Bulletin 86/44

(84) Designated Contracting States:
DE FR GB IT

(71) Applicant: Gough, Peter Travis
25 Resolution Place
Christchurch 5(NZ)

(71) Applicant: Kay, Leslie
82 Scarborough Road
Christchurch 8(NZ)

(71) Applicant: Cusdin, Michael John
7 Esher Place
Christchurch 2(NZ)

(72) Inventor: Gough, Peter Travis
25 Resolution Place
Christchurch 5(NZ)

(72) Inventor: Kay, Leslie
82 Scarborough Road
Christchurch 8(NZ)

(72) Inventor: Cusdin, Michael John
7 Esher Place
Christchurch 2(NZ)

(74) Representative: Billington, Lawrence Emlyn et al,
HASELTINE LAKE & CO Hazlitt House 28 Southampton
Buildings Chancery Lane
London WC2A 1AT(GB)

(54) Continuous transmission synthetic aperture sonar.

(57) A synthetic aperture side scan sonar using continuous instead of pulsed transmission. The transmission is frequency coded to determine range.

A continuous transmission frequency modulation (CTFM) sonar (4, 20) transmits and receives continuously as it moves underwater along a track at right angles to the transmitted sonar beam. The echoes received are demodulated by the sonar (4, 20) to produce a collection of frequencies with different phases at baseband where the value of the frequency represents the range of each echo producing underwater target. This spectral information is recorded on a tape recorder (6) as the sonar moves along a defined track. The tape recording is subsequently played back and the phase and amplitude information of the demodulated echoes is processed by a computer (7, 22) which produces an underwater map on a graphics printer (46) which appears to have been produced from a sonar having an aperture approximately the length of the underwater track traversed by the sonar.

./...

Croydon Printing Company Ltd.

FIG.1.

## CONTINUOUS TRANSMISSION SYNTHETIC APERTURE SONAR

The invention relates to side scan sonars and/or radar and in particular, but not solely underwater sonar systems.

The traditional method to image the seafloor using side-looking sonars is to use a large transducer with a narrow beamwidth and to transmit as short a pulse as possible while the sonar is being towed along at a constant velocity. The echoes returned from the illuminated area are then a record of target strength versus range, and if sequences of these returned echoes are displayed side by side, a two-dimensional image of the seafloor is produced.

Almost all commercial side-looking sonars use variations of this approach. However, this approach does have some well-known limitations, the major limitation being that the along-track (azimuth) resolution gets noticeably poorer at greater ranges. In addition, to achieve beamwidths better than $1/2^o$ with not unreasonably sized transducers, frequencies above 100 kHz are usual, some even going as high as 500 kHz. Unfortunately at these frequencies the path loss due to attenuation becomes significant.

Several schemes using lower frequencies and consequently wider beamwidths have been proposed as modifications to this traditional approach. .[P.D. Hanstead, "Simplified digital synthesis of ultrasonic images," Proc. Roy. Soc, London vol A374, PP 491-502,1981; P.de Heering, "Alternative schemes in synthetic aperture sonar processing, "IEEE J. Ocean, Eng, vol. OE-9, no. 4, pp. 277-280, 1984]. In all these schemes there is a single wide beam sonar moving at right angles to the beam direction. Consequently, a single isolated object in the footprint area remains in the illuminating beam for many pulses and consequently over a very large aperture. The raw data gathered by this process are manipulated using simple geometrical projection and noncoherent addition into an image that has a better azimuth resolution than that of the transducer.

Since the azimuth resolution in the final image is better than that of the transducer, this system might appear to be a synthetic aperture sonar. However, it is not, as only the envelopes of the returned echoes are processed. The changing phase, changing Doppler, or changing angle of arrival are all ignored. This type of approach is now known as "envelope" processing and has the advantage that it is relatively robust, can tolerate a considerable degree of positional error, and yet still reveal an acceptable image. Its disadvantage is that it relies on

there being only one strong target at any one range. If this is not the case and there are multiple targets of equal strength at the same range or the targets show strong directional qualities or there is a great deal of background clutter, the image deteriorates.

One refinement of the envelope processing technique uses a single wide-beam transmitting projector and two displaced receiving hydrophones. P.T Gough, "Side-looking sonar or radar using phase difference monopulse techniques: coherent and noncoherent applications, "IEE PROC., VOL.130, PART f, pp. 392-398, 1983; P.T Gough, "Phase comparison side-scan radar," presented at NATO Advanced Study Workshop on Inverse Methods in Electromagnetic Imaging, Bad Windsheim, West Germany, Aug. 1983]. The phase centers of the hydrophones are spaced by less than a wavelength and used as a phase-differencing interferometer (the "phase monopulse" system). This arrangement of hydrophones measures the phase difference between the same pulse echo as it is received by the two separated hydrophones. This phase difference is directly related to the angle of arrival of the pulse echo. However, as with "envelope processing," the phase difference relates only to the strongest target in any one range cell. A knowledge of the range and the approximate direction of the strongest target at that range is sufficient to produce a crude two-dimensional image of the seafloor from the current position of the sonar. Thus as the sonar moves along, this image is continuously refined by the noncoherent addition of images formed from different positions of the sonar. This technique has been called "radial projection." Although this type of processing has been shown to be quite robust and sufficiently simple to operate in real time, certain arrangements of targets can produce artifacts.

One way to improve the azimuth resolution in a side-looking imaging sonar without increasing the transducer aperture or increasing the frequency is to synthesize a larger aperture from a sequence of measurements made with a smaller aperture. In theory at least, this technique can be implemented by transmitting a modulated pulse, detecting and storing the amplitude and phase of all the pulse echoes, and then moving the physical aperture to repeat·the process. Later, all the amplitude and phase histories can be combined coherently to synthesize a return that would have been received by a much larger aperture. [G.A Gilmour, "Synthetic aperture side-looking sonar systems, "U.S. Patent 4088978.]

This technique also presents problems. The first is keeping the sonar on a constant heading and on a fixed straight path. The second and more fundamental difficulty is associated with the turbulence in the ocean environment. In a somewhat simplistic view, the major effect of turbulence in the ocean is that the energy no longer travels along the shortest path, so there are random path-length variations from the sonar to the target and return. These path-length variations produce a fluctuating phase (often of many radians) on top of the phase to be measured. This fluctuating random phase is unfortunate as it destroys the pulse-to-pulse phase coherence necessary to coherently synthesize a larger aperture.

In a synthetic aperture sonar based on a modulated pulse transmission, the sonar cannot move forwared more than $\lambda/2$ per pulse period if grating lobes due to aperture undersampling are to be avoided. Since most narrow-beam side-scan sonars have beamwidths of more than $3^o$, a synthetic aperture sonar would have to traverse an aperture of at least $20\lambda$ before it can even compete with traditional techniques. Unfortunately, a $20\lambda$ aperture takes more than 40 pulse repetition periods to traverse, and this restriction limits the boat speed quite severely.

To give an illustrative example, a 15-kHz side-scan sonar with a 500-m maximum range would have a pulse repetition period approaching 1S. Thus synthesizing a $20\lambda$ aperture would take 40 s and in 40 s the sonar could move no more than 2 m - a speed of 0.1 kn.

It is therefore the object of this invention to provide a synthetic aperture sonar which overcomes the above mentioned disadvantages.

Accordingly the invention may broadly be said to consist in a method of producing a sonar side scan image comprising:

transmitting a wide bandwidth continuous transmission sonar beam into a target zone; receiving echo signals returned from the target zone;

demodulating said echo signals;

analysing said echo signals into their spectral frequency components;

determining phase or phase and amplitude information for each spectral component; and

constructing an image of at least part of the target zone from said phase or phase and amplitude information;

wherein at least said transmission and reception steps are performed while moving either the transmitter or receiver or both

over a substantially straight track parallel to the target zone and substantially perpendicular to the beam direction; and

wherein said constructed image appears to have been produced by a conventional sonar with transmitter and/or receiver apertures larger than the physical apertures of said transmitter and/or receiver.

In the preferred method said echo signals are received by two receiving transducers separated along said track by a small distance; said demodulating step comprises separately demodulating the signals produced by said receiving transducers; said analysing step comprises separately analysing the demodulated signals; said determining step produces phase information representing the phase difference between corresponding spectral components of the signals received by each receiving transducer and amplitude information representing the average of the amplitude values for corresponding spectral components from each receiving transducer.

In a second aspect the invention consists in an apparatus for producing a side scan sonar image comprising:

a transmitter for transmitting a wide bandwidth continuous transmission sonar beam into a target zone;

receiver means for receiving echo signals returned from the target zone;

demodulation means for demodulating said echo signals;

spectral analysis means for analysing said demodulated echo signals into their spectral frequency components;

phase determination means for determining phase or phase and amplitude information for each spectral frequency component; and means for constructing an image or at least part of the target zone from phase and amplitude information collected while the transmitter and/or receiver means are moved, in use, along a substantially straight track parallel to the target zone and substantially perpendicular to the beam direction during transmission/reception, which image appears to have been produced by a conventional sonar with transmitter and/or receiver apertures larger than the physical apertures of said transmitter and/or receiver means.

In the preferred apparatus said receiver means comprises two receiving transducers, which in, use are separated by a small distance; and said demodulation, spectral analysis and determination means, in use, co-operate to produce said phase information which represents the phase difference between corresponding spectral components of the signals received by each receiving transducer and to produce said amplitude information which represents the average of the amplitude valves for corresponding spectral components for signals from each receiving transducer.

The present synthetic aperture sonar does not have its forward velocity fixed by the pulse repetition rate as it uses wide bandwidth continuous transmission radiation. This can include any schemes using maximal length psuedo-random sequences or transmission of multiple frequencies. Preferably it is one based on continuous transmission frequency modulation (CTFM). With such CTFM synthetic aperture sonar, the forward velocity of the boat is not determined by the sweep or pulse repetition rate but is determined by the frequency resolution of the spectrum analyzer that converts the sonars's output into a target-strength-versus-range display. With such a sonar the range resolution is variable, and the coarser the range resolution selected, the more rapidly the reflectivity versus range may be refreshed. These higher refresh rates enable the sonar to move with a higher velocity covering the wanted synthetic aperture in a shorter period of time. the increase in velocity alone will produce an improvement in the performance of a synthetic aperture sonar as the surrounding medium has less time to alter the path length and the path directions significantly.

To give a comparative example, a CTFM side-scan sonar of the present invention might sweep a band 10-20 kHz set to a range resolution of 1 m out to a maximum range of 500 m. This CTFM sonar is not the traditional 10-percent bandwidth system, but one that makes full use of the transmitted bandwidth. The refresh time of the amplitude and phase versus range is determined by the response time of the filters that comprise the frequency analyzer which in this case would be around 50 ms. Such a side-scan sonar has the capability of covering the comparable 2-m aperture in 2 s - a speed of just under 2 kn or 20 times faster than the equivalent pulsed sonar. If the sonar is required to have a range resolution of 0.5 out to 500 m, then the refresh time is increased to 100 ms and the velocity is down to 1 kn-still over ten times better than the equivalent pulsed sonar.

The use of a phase-differencing interferometer or phase mono-pulse in addition to CTFM makes the synthetic aperture sonar quite insensitive to lateral towfish movements and, more importantly, to almost all extraneous path-length variations from the sonar to the target and return.

Preferred embodiments of the invention will now be described with reference to the accompanying drawings in which:

Figure 1 is a block diagram of a CTFM sonar system suitable for data collection and for real time display,

Figure 2 is a block diagram showing an extension to the figure 1 system to compute synthetic aperture sonar maps, and

Figure 3 is a block diagram of the sonar transmitter and receivers.

The preferred apparatus is a side-scan sonar and as such has the two channels looking out to starboard and two channels looking to port.

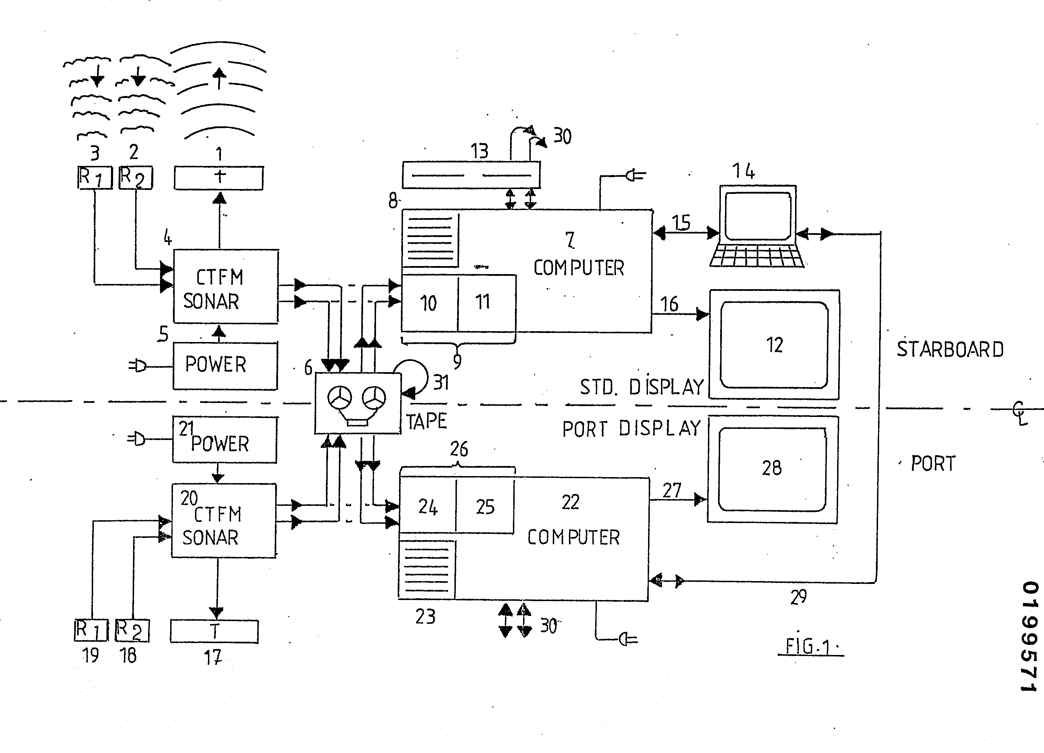

In Figure 1, a continuous transmission frequency modulated (CTFM) wave is transmitted by the transducers 1 and 17, to be reflected off objects in the beam and the continuous reflections or echoes are detected by paired starboard hydrophones 2 and 3 and port hydrophones 18 and 19. The sonars 4 and 20, with independent power supplies 5 and 21, continuously demodulate the echoes to a collection of constant frequencies in the baseband where the value of the frequency indicates the range as is now shown.

The swept frequency signal may be described as

$$s(t)=\cos[2\pi ft-2\pi ft^2 4T]$$

which is a signal with a decreasing swept frequency from f to f/2 in a period T. This signal has a one octave bandwidth. The system may have more or less bandwidth if required.

For a single target in the insonified volume the echo detected by a single hydrophone is described by

$$e(t)=\cos[2\pi f(t-2r/c) - 2\pi f(t-2r/c)^2/4T]$$ where r is the range of the single target and c is the speed of sound underwater. The processing required is to multiply e(t) with a replica of s(t) and to pass the resultant signal through a low pass filter to remove the sum frequencies $4\pi f$.

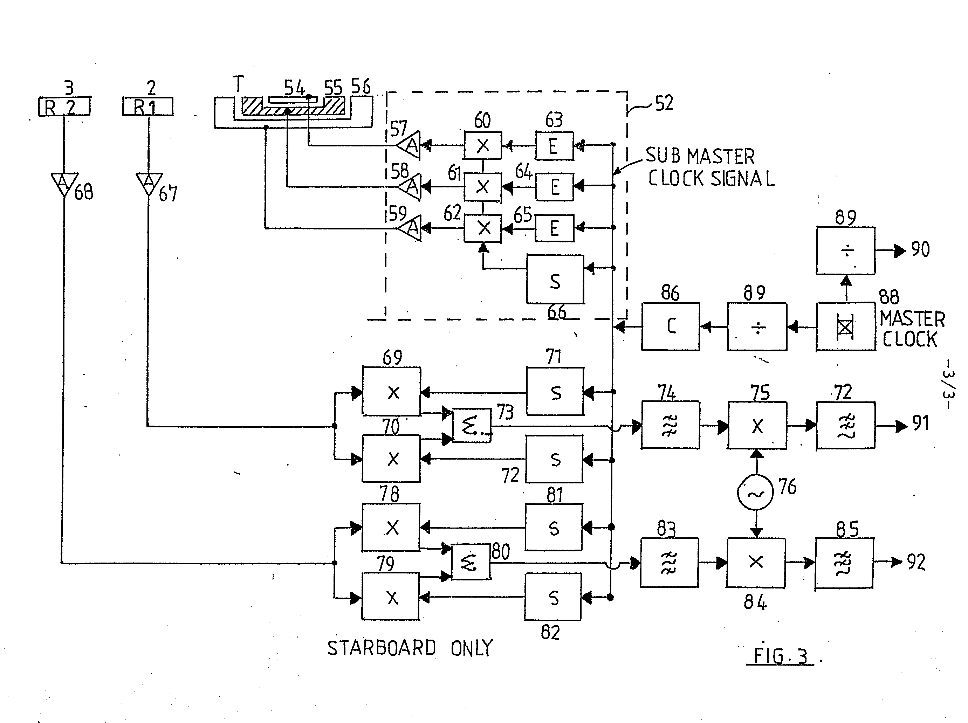

After demodulation, (to be described with reference to Figure 3) the continuous signal is described by

$$x(t)=1/2 \cos[2\pi.(f/2T)(2r/c).t -2\pi f(2r/c)(1+r/2Tc)]$$

Thus this demodulated echo has a frequency of {(f/2T)(2r/c)} and a phase with respect to t at zero of {2$\pi$f(2r/c)(1+r/2Tc)}. Note that as with CTFM sonars the frequency is linearly related to the range of the target r.

When more than one target is present, the demodulation echoes become a collection of different frequencies all at different phases.

Thus the collection of constant frequencies represent the distance to a collection of scattering elements formed by the acoustic boundaries of the objects in the medium. As well, the phase contains sufficient information to reconstruct a synthetic aperture as the transducers move perpendicular to the axis of the direction of propagation of the wave energy.

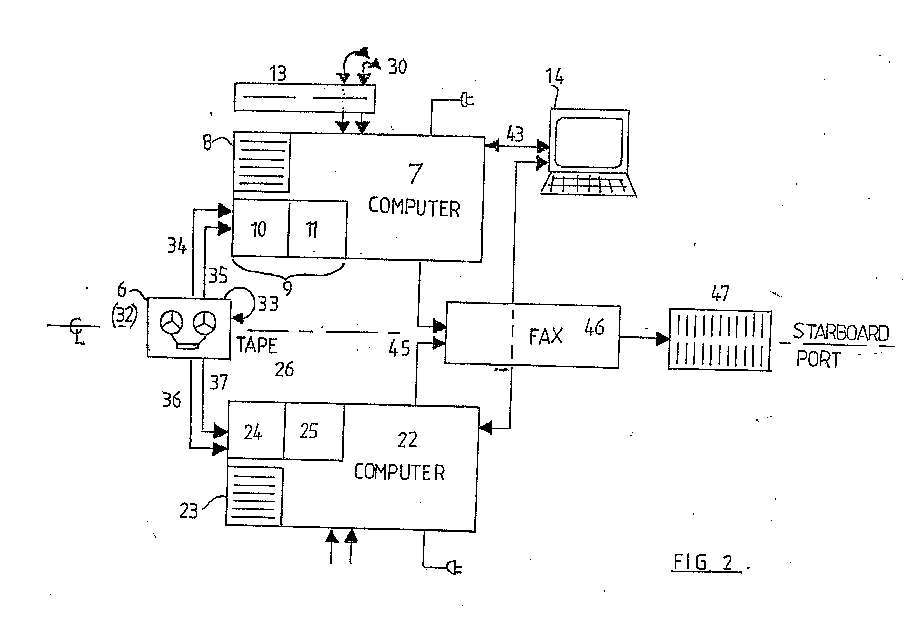

Thus the output of the sonar per se is four baseband signals comprising the four sets of demodulated echoes which may be used directly to produce a non-synthetic real time display (Figure 1) or stored in a 4-channel tape recorder 6 for subsequent processing into a synthetic aperture image (Figure 2).

Referring to Figure 1, the two signals from each sonar channel are passed to a two channel spectrum analyser 9 (and 26) which comprises a two channel analogue to digital (A/D) converter 10 (and 24) followed by an array processor 11 (and 25) optimised for the Fast Fourier Transform (FFT). The computer 7 (and 22) requires a hard disk 8 (and 23) with a floppy disk drive (which may be shared) 30. The controlling terminal 14 is attached to both computers 15 and 29. The computer 7 (and 22) has a video display controller to provide output 16 (and 27) to drive the left and right displays 12 and 28.

Depending on the frequencies used and the sophistication of the computing required, it would be possible to use a single computer/spectrum analyser and multiplex it between the two channels from the lefthand side and the two channels from the righthand side.

Figure 2 shows an extension to the figure 1 system to produce a high quality high resolution synthetic aperture image from the previously stored demodulated echoes. The tape recorder 6 is rewound and used in the playback mode 32 with a closed loop speed control 33. The two right signals 34 and 35 and the two left signals 36 and 37 are again passed into the spectrum analysers 9 and 26. Since the synthetic aperture calculation is lengthy, real time operation is not yet possible so the set of spectral outputs representing some km of sonar movement is stored on the hard disks 8 and 23. When the disks are full the tape recorder halts. The computers 7 and 22, the spectrum analysers 9 and 26, the hard disks 8 and 23, the terminal 14 and the floppy disk drives are the same as those used for the real time mode; only the software used to run the computers is changed.

For true synthetic aperture processing with or without paired hydrophones, the computer algorithm is based on holographic principles.        This is explained as follows:

Single Hydrophone:

Let IC $(\alpha,\beta)$ be the image where

$$IC\ (\alpha,\beta) = \sum_{v=\beta-\alpha/W}^{\beta+\alpha/W} SC\ (u,v)\ e^{\ j2\pi u/\lambda\ (i\ +\ u/2Tc)}$$

Where SC (u,v) is the amplitude and phase recorded by the sonor as a function of range u, and along-track v.

$(\alpha,\beta)$ correspond to cross-track and along track coordinates in image space.  u and v are related to $\alpha$ and $\beta$ by

$$u = \sqrt{\alpha^2 + (v-\beta)^2}$$

$\alpha/W$ is the size of the aperture to be synthesised.

W = 1/tan$\theta$ where  is the beamwidths of the tranducer(s).

T  is the sweep period of the CTFM transmission.

c  is the speed of sound.

$\lambda$ is the wavelength of the transmitted signal at time = 0, T, 2T etc.

Paired Hydrophones:

ICD $(\alpha,\beta)$ is the reconstructed image.

$$ICD\ (\alpha,\beta) = \sum_{v=\beta-\alpha/W}^{\beta+\alpha/W} SCD\ (u,v)\ e^{j2\pi\ [2D(v-\beta)k\lambda]}$$

where SCD (u,v) is the average amplitude and phase difference recorded by the CTFM sonar as a function of range u, and along-track v.

2D is the separation of the phase centres of the two hydrophones and

$$SCD(u,v) = \frac{[|SC\ (u,v-D)| + |SC(U,V+D)|]}{2}$$
$$xe^{j\{phase\ SC\ (u,v-D)\ -\ phase\ SC(u,v+D)\}}$$

SCD(u,v) is a complex number and must be squared or turned into some type of positive number before it can be displayed by a printer.

After the two computers 7 and 22 have finished computing with the data it has stored on the hard disks, and the final synthetic aperture map is passed via interface 45 to a printer or facsimile machine 46 to produce a side scan synthetic aperture sonar map or image 47 of the sea floor.

In figure 3 the details of the dual demodulation receiver and transmitter system for a single channel (right channel) are shown.  The entire system is controlled by a precision crystal master clock 88 the output of which is divided down by divider 87, and counter 86 to a suitable sub-master clock frequency. This can be altered by a counter 86 if the maximum range is altered. The sub-master clock signal controls the transmitter 52 sweep frequency synthesiser 66.

The transmitting transducer 1 in Figure 1 is physically divided into 3 sections 54, 55 and 56. This technique ensures constant beamwidth. When the upper frequency is transmitted only the centre section 54 is activated. At mid frequencies the centre two sections 54 and 55 are activated while at the lowest frequency all three section 54, 55 and 56 are activated.

The precise waveform sent to each section is controlled by three EPROMs 63, 64, 65 coupled to three Multiplying Digital to Analogue converters (MDAC) 60, 61 62 driving three power amplifiers 57, 58, 59.

The received echoes are detected by the hydrophones 3 and 2, amplified by amplifiers 67 and 68 and passed to dual demodulators 69 and 70 for R1 with 78 and 79 for R2. The second inputs of the demodulators are supplied by individual swept frequency synthesisers 71, 72, 81, 82. The outputs of each pair of demodulators are fed to summers 73 and 80. Although identical in form, the synthesisers (as with synthesiser 66) are configured to produce frequencies covering different ranges. This is so the outputs of summers 73 and 80 have the wanted frequencies at an intermediate frequency (IF) range which may be range corrected to remove unwanted frequencies by bandpass filters 74 and 83. These IF signals are then fed to demodulators 75 and 84 which produce baseband using a fixed frequency local oscillator 76. Finally two low pass filters 77 and 85 remove the sum frequency products generated by demodulators 75 and 84. Thus the outputs of the right channel of the CTFM sonar are two sonar signals 91 and 92 representing the demodulated echoes from hydrophones 2 and 3.

Every item shown in Figure 3, except the clock 88 is duplicated for the left channel. If required, a synchronising signal 90 from divider 89 fed from the master clock 88 may be used for tape recorder speed control.

Claims:

1.      A method of producing a side scan sonar image comprising: transmitting a wide bandwidth continuous transmission sonar beam into a target zone; receiving echo signals returned from the target zone;

demodulating said echo signals;

analysing said echo signals into their spectral frequency components;

determining phase or phase and amplitude information for each spectral component; and

constructing an image of at least part of the target zone from said phase or phase and amplitude information;

wherein at least said transmission and reception steps are performed while moving either the transmitter or receiver or both over a substantially straight track parallel to the target zone and substantially perpendicular to the beam direction; and

wherein said constructed image appears to have been produced by a conventional sonar with transmitter and/or receiver apertures larger than the physical apertures of said transmitter and/or receiver.

2.      A method according to claim 1 wherein said continuous transmission is frequency modulated.

3.      A method according to claim 2 wherein said echo signals are received by two receiving transducers separated along said track by a small distance; said demodulating step comprises separately

demodulating the signals produced by said receiving transducers;

said analysing step comprises separately analysing the demodulated signals; said determining step produces phase information representing the phase difference between corresponding spectral components of the signals received by each receiving transducer and amplitude information representing the average of the amplitude values for corresponding spectral components from each receiving transducer.

4.      A method according to any one of the preceding claims wherein said transmitter and receiver are moved together along said track during said transmission and detection steps.

5.      A method according to any one the preceding claims wherein: said phase or phase and amplitude information is stored and said image is constructed from the stored phase or phase and amplitude

0199571

information.

6.      Apparatus for producing a side scan sonar image comprising: a transmitter for transmitting a wide bandwidth continuous transmission sonar beam into a target zone; receiver means for receiving echo signals returned from the target zone; demodulation means for demodulating said echo signals; spectral analysis means for analysing said demodulated echo signals into their spectral frequency components; phase determination means for determining phase or phase and amplitude information for each spectral frequency component; and means for constructing an image or at least part of the target zone from phase and amplitude information collected while the transmitter and/or receiver means are moved, in use, along a substantially straight track parallel to the target zone and substantially perpendicular to the beam direction during transmission/reception, which image appears to have been produced by a conventional sonar with transmitter and/or receiver apertures larger than the physical apertures of said transmitter and/or receiver means.

7.      Apparatus according to claim 6 wherein said transmitter transmits a continuous transmission frequency modulated signal.

8.      Apparatus as claimed in claim 7 wherein: said receiver means comprises two receiving transducers, which in, use are separated by a small distance; and said demodulation, spectral analysis and determination means, in use, co-operate to produce said phase information which represents the phase difference between corresponding spectral components of the signals received by each receiving transducer and to produce said amplitude information which represents the average of the amplitude valves for corresponding spectral components for signals from each receiving transducer.

9.      Apparatus as claimed in any one of claims 6 to 8 wherein the transmitter and receiver means are separated by a fixed distance in the intended direction of motion.

10.      Apparatus as claimed in any one of claims 6 to 9 including: storage means for storing the demodulated echo signals produced by said demodulation means for latter retrieval and reception by said spectral analysis means.

11. A method of producing a side scan sonar image substantially as hereinbefore described with reference to the accompanying drawings.

12. Apparatus for producing a side scan sonar image substantially as hereinbefore described with reference to the accompanying drawings.

FIG.1

STARBOARD

STD. DISPLAY

PORT DISPLAY

PORT

-1/3-

0199571

FIG 2.

FIG. 3

STARBOARD ONLY

SUB MASTER CLOCK SIGNAL

MASTER CLOCK

-3/3-

0199571

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-4 244 036 (RAVEN) <br> * Abstract; column 1, lines 7-60; column 2, line 36 - column 3, line 33; column 4, line 11 - column 5, line 29; column 9, line 15 - column 10, line 53 * | 1-10 | G 01 S 15/89 <br> G 01 S 15/10 <br> G 01 S 13/90 <br> G 01 S 13/34 |
| | --- | | |
| Y | PROCEEDINGS OF THE INSTITUTION OF ELECTRICAL ENGINEERS, vol. 107, part B, no. 34, July 1960, pages 365-372, London, GB; A.J. HYMANS et al.: "Analysis of a frequency-modulated continuous-wave ranging system" <br> * Whole document * | 1-10 | |
| | --- | | |
| X | SYNTHETIC APERTURE RADAR, 1976, pages 32-54, Artech House Inc., Dedham, US; J.J. KOVALY: "Radar techniques for planetary mapping with orbiting vehicle" <br> * Pages 37-42; sections entitled: "Linear FM transmitted pulse", "Two-dimensional resolution" * | 1,2,5 | TECHNICAL FIELDS SEARCHED (Int. Cl.4) <br><br> G 01 S <br> G 03 H |
| | --- -/- | | |

The present search report has been drawn up for all claims

| Place of search | Date of completion of the search | Examiner |
|---|---|---|
| THE HAGUE | 16-07-1986 | OLDROYD D.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82

| | DOCUMENTS CONSIDERED TO BE RELEVANT | | Page 2 |
|---|---|---|---|
| Category | Citation of document with indication, where appropriate, of relevant passages | Relevant to claim | CLASSIFICATION OF THE APPLICATION (Int. Cl.4) |
| A | ULTRASONICS, vol. 16, no. 6, November 1978, pages 251-258, IPC Business Press, Guildford, GB; G. BERBEKAR et al.: "Hologram aperture synthesis with frequency sweeping" * Page 251, abstract, "introduction": paragraph 5; page 252, left-hand column, line 8 - right-hand column, line 16 * | 1,2 | |
| A | ELECTRONICS LETTERS, vol. 17, no. 22, 29th October 1971, pages 841,842, London, GB; D.I. SHAW et al.: "Pseudostereoscopic holographic imaging system: a possible approach to high resolution underwater mapping" * Whole document * | 1,4 | |
| A | JOURNAL OF THE ACOUSTICAL SOCIETY OF AMERICA, vol. 62, no. 2, August 1977, pages 341-345, The Acoustical Society of America, New York, US; T. SATO et al.: "Super-resolution ultrasonic imaging by combined spectral and aperture synthesis" * Whole document * | 1,2 | TECHNICAL FIELDS SEARCHED (Int. Cl.4) |
| A | US-A-4 400 803 (SPIESS et al.) * Abstract; column 1, line 62 - column 3, line 21 * | 1,2,6,7 | |

-/-

The present search report has been drawn up for all claims

| Place of search | Date of completion of the search | Examiner |
|---|---|---|
| THE HAGUE | 16-07-1986 | OLDROYD D.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82

**European Patent Office**

## EUROPEAN SEARCH REPORT

| | DOCUMENTS CONSIDERED TO BE RELEVANT | | Page 3 |
|---|---|---|---|
| **Category** | **Citation of document with indication, where appropriate, of relevant passages** | **Relevant to claim** | **CLASSIFICATION OF THE APPLICATION (Int. Cl.4)** |
| A | US-A-3 790 939 (CONSTANT) | | |
| | --- | | |
| A | EP-A-0 028 895 (NASA) | | |
| | --- | | |
| A | EP-A-0 048 170 (ELLIOTT BROTHERS) | | |
| | --- | | |
| A | IEEE PROCEEDINGS, vol. 132, part F, no. 1, February 1985, pages 45-57, Stevenage, Herts, GB; M. SACK et al.: "Application of efficient linear FM matched filtering algorithms to synthetic aperture radar processing"<br>* Section 3.1, Basic spectral dualysis; sector 3.2, the step transform * | 1,2 | |
| | --- | | TECHNICAL FIELDS SEARCHED (Int. Cl.4) |
| A | 1979 INTERNATIONAL SYMPOSIUM ON CIRCUITS AND SYSTEMS, PROCEEDINGS, Tokyo, JP, 17th-19th July 1979, pages 979,980, IEEE catalog no. 79CH1421-7 CAS; W.K. JENKINS: "Techniques in digital signal processing for synthetic aperture radar"<br>* Whole document * | 1,2 | |
| | ----- | | |

The present search report has been drawn up for all claims

| Place of search | Date of completion of the search | Examiner |
|---|---|---|
| THE HAGUE | 16-07-1986 | OLDROYD D.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO Form 1503. 03.82